# EUROPÄISCHE PATENTSCHRIFT

(11) **EP 0 567 774 B1**
(45) Veröffentlichungstag und Bekanntmachung des Hinweises auf die Patenterteilung: **15.11.1995**
(21) Anmeldenummer: 93104836.7
(22) Anmeldetag: 24.03.1993
(51) Int. Cl.: B62J 6/04

(54) **Schlussleuchte für Zweiradfahrzeuge**
Tail lights for two-wheeled vehicle
Feux arrière pour véhicule à deux roues

(30) Priorität: 14.04.1992 CH 1231/92
(43) Veröffentlichungstag der Anmeldung: 03.11.1993
(73) Patentinhaber: BISY Bike Systems Industrielle Fertigung von Fahrradteilen GmbH, D-76473 Iffezheim (DE)
(72) Erfinder: Schwaller, Edwin, CH-5024 Kuttigen (CH); Zürcher, Walter, CH-5000 Aarau (CH)
(74) Vertreter: Lemcke, Rupert, Dipl.-Ing.

(56) Entgegenhaltungen:
- EP-A- 0 274 675
- DE-A- 2 953 938
- FR-A- 1 053 465
- FR-A- 2 276 980
- GB-A- 745 183
- US-A- 2 694 138
- US-A- 4 860 177

## Beschreibung

Die Erfindung betrifft eine Schlussleuchte für Zweiradfahrzeuge, insbesondere für Fahrräder.

Herkömmliche Schlussleuchten werden mit Glühbirnen betrieben. Diese haben die Eigenschaft, Licht über einen grossen Raumwinkel einigermassen gleichmässig abzustrahlen. Mit einer einzigen Glühbirne kann damit in einem Rücklicht eine ausreichende Lichtintensität sowohl nach rückwärts, wie auch zur Seite hin und nach oben erreicht werden. Die gesetzlichen Bestimmungen über Schlussleuchten sehen denn auch bestimmte Mindestlichtwerte in den einzelnen Raumwinkeln vor. Es kann z.B. auf § 67, TA Nr. 14 der deutschen StVZO verwiesen werden.

Die Glühbirnen, die zur Erreichung der vorschriftsmässigen Werte nötig sind, haben eine Nennspannung von ca. 6 V und eine Leistungsaufnahme von 0,6 W. Sie haben in der Regel eine Lebensdauer von ca. 100 Stunden zufolge der bruchgefährdeten Glühwendel. Andererseits besteht das Bedürfnis, in neuen Lichtanlagen für Zweiradfahrzeuge die Leistungsaufnahme der Lichtquellen möglichst zu senken und auf tiefem Wert zu stabilisieren, damit die Lichtanlage bei langsamer Fahrweise ausreichende Lichtwerte erzeugt und bei rascherer Fahrweise ein Teil der Leistung in einem Akku geladen werden kann. Die Lichtanlage soll auch als Standlicht betrieben werden können. Zugleich besteht das Bedürfnis, die Lebensdauer der Lichtquelle zu verlängern.

Auf diesem Hintergrund stellt sich die Aufgabe, eine Schlussleuchte der eingangs genannten Art zu schaffen, die bei reduzierter Leistungsaufnahme die vorschriftsgemässen Lichtwerte erreicht und eine verlängerte Lebensdauer besitzt.

Diese Aufgabe wird durch in den Patentansprüchen genannten Merkmale erreicht.

Durch die Verwendung von Leuchtdioden kann die Leistungsaufnahme um etwa die Hälfte auf 0,3 W gesenkt werden. Da jede der Leuchtdioden bei 2 V Spannung betrieben wird, können ausreichende Lichtwerte schon ab etwa 3 km/h Fahrgeschwindigkeit erzielt werden. Mit einer Spiegeloptik gelingt es, trotz der stark gerichteten Leuchtcharakteristik von Leuchtdioden die erforderliche Lichtverteilung mit zwei oder drei Leuchtdioden zu erreichen. Deren Lebensdauer beträgt bis zu 100'000 Stunden, da es sich um Lichtquellen ohne bruchgefährdete Glühwendeln handelt.

Aus der US-A-4 860 177 ist eine Schlußleuchte bekannt, die mehrere Leuchtdioden benutzt; alle sind aber nach rückwärts ausgerichtet.

Nachfolgend wird die Erfindung anhand von zwei Ausführungsbeispielen erläutert, die in den beiliegenden Figuren dargestellt sind. Dabei zeigt:
Figur 1 eine Rückansicht einer ersten Ausführung der Schlussleuchte;
Figur 2 den Träger dieser Schlussleuchte mit drei Leuchtdioden in perspektivischer Darstellung;
Figur 3 eine Seitenansicht der Schlussleuchte von Figur 1;
Figur 4 eine Seitenansicht des Trägers von Figur 2;
Figur 5 eine Rückansicht des Trägers von Figur 2;
Figur 6 eine Aufsicht auf den Träger von Figur 2, und
Figur 7 eine weitere Ausführung eines Trägers mit zwei Leuchtdioden.

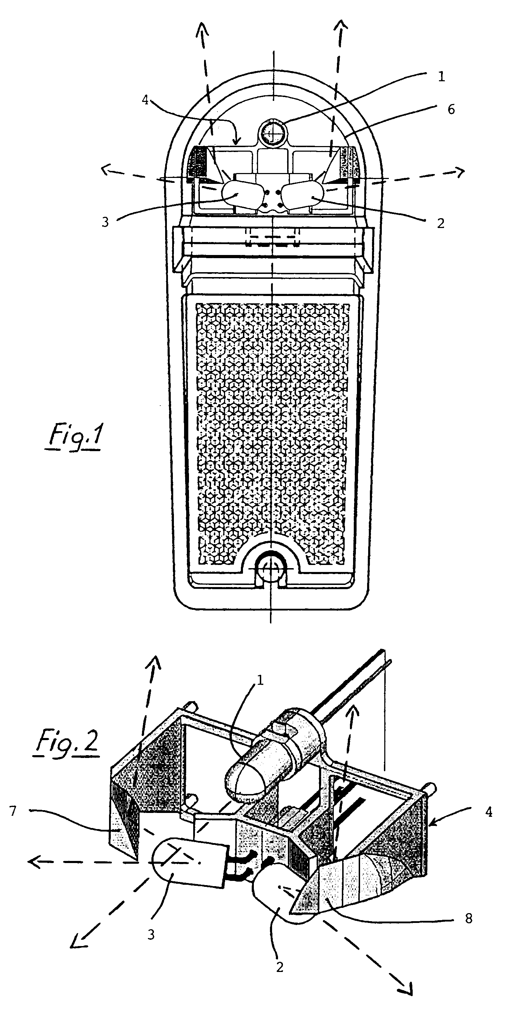

Zunächst wird anhand der Figuren 1 bis 6 ein erstes Ausführungsbeispiel der Erfindung erläutert, bei welchem drei oder vier Leuchtdioden 1, 2, 3 eingesetzt werden. Die Leuchtdioden sind auf einem Träger 4 befestigt, an welchen auch eine Spiegeloptik angeordnet ist, wie noch näher erläutert wird. Der Träger 4 ist in einem an sich herkömmlichen Schlussleuchten-Gehäuse 5 angeordnet. Die Abdeckhaube 6 für den Träger 4 ist dabei allerdings aus glasklarem Kunststoff, da als Leuchtdioden vorzugsweise solche im roten Wellenlängenbereich eingesetzt werden. Damit lässt sich der Lichtverlust durch die Abdeckhaube 6 minimieren.

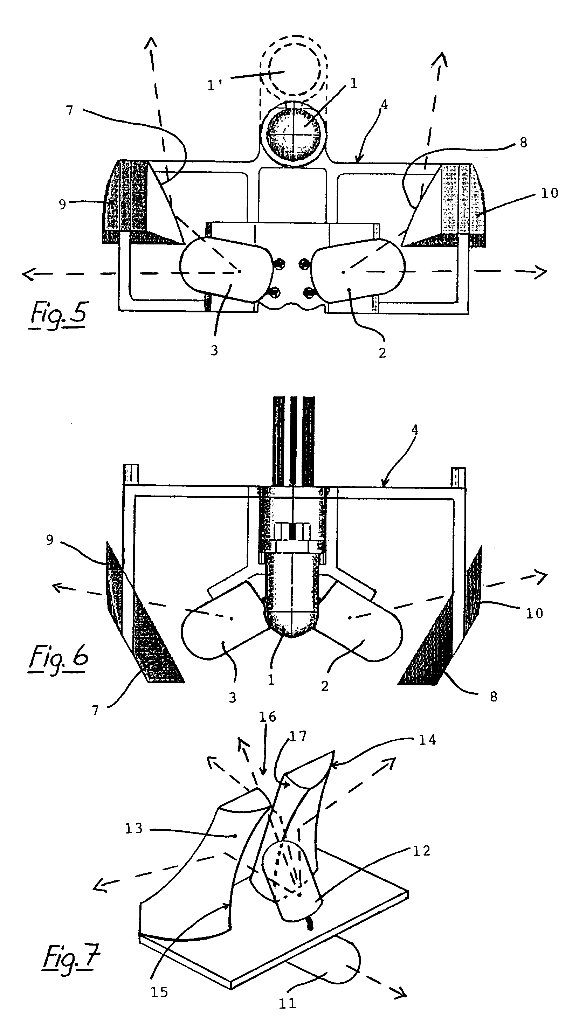

Eine (oder zwei, vgl. Fig. 5) der Leuchtdioden 1 (1') ist in der Fahrzeugachse angeordnet und als Rücklicht nach hinten gerichtet. Hierfür kann z.B. eine GaAlAs-LED mit relativ stark gerichteter Leuchtcharakteristik, z.B. einem Halbwerts-Wert bei 5°, verwendet werden.

Das Licht dieser Leuchtdiode 1 wird also ohne weitere optische Beeinflussung genutzt.

Die beiden anderen Leuchtdioden 2, 3 sind vorgesehen für die Erzeugung ausreichender Lichtwerte in die zur Fahrrichtung seitlichen Abstrahlwinkel, welche beidseitig bis zu 20° nach vorne reichen müssen, sowie in einen Raumwinkel nach oben, der ebenfalls bis zu 45° nach vorn reichen muss. Diese Leuchtdioden 2, 3 sind mit ihren Achsen nach der Seite hin ausgerichtet, wie insbesondere der Figur 6 zu entnehmen ist. Es werden vorzugsweise GaAlAs-LED verwendet, deren Leuchtcharakteristik den Halbwerts-Wert bei 45° hat. Durch die Ausrichtung der Leuchtdioden 2, 3 nach der Seite hin, kann so ein bis 20° nach vorne reichender, seitlicher Abstrahlwinkel erreicht werden (vergl. Figur 6).

Für den nach oben gerichteten, sich öffnenden Raumwinkel ist seitlich je ein Spiegel 7, 8 vorgesehen, mittels welchem jeweils ein Teil des Lichts der betreffenden Leuchtdiode 2, 3 nach oben abgelenkt wird. Die Spiegel 7, 8 sind als konvexe Zylinderspiegel ausgebildet, so dass das reflektierte Licht je einen sich nach oben öffnenden Kegel bildet. Die Achsen der Zylinderspiegel 7, 8 sind quer zu den jeweiligen Leuchtdioden 2, 3 ausgerichtet und stehen demnach ebenfalls in einem Winkel zur Fahrrichtung. Damit wird erreicht, dass das Licht in einen bis 45° nach vorne reichenden Raumwinkel reflektiert wird, wobei sich die Abstrahlzonen der beiden Spiegel 7, 8 mittig überlappen.

Die Leuchtdioden sind auf dem Träger 4 befestigt. Dieser kann als Metall- oder Kunststoff-Spritzgussteil ausgebildet sein, in welchen auch die Spiegel 7, 8 eingeformt sind. Seitliche Vorsprünge 9, 10 dienen zur Abstützung an der Abdeckhaube 6 und damit zur Positionierung des Trägers 4. Der Träger 4 ist als Ganzes oder zumindest im Bereich der Spiegel 7, 8 mit einer Spiegelbeschichtung versehen. Andererseits können auch spiegelnde Folien an den Spiegelflächen angebracht sein.

Zur Erhörung der Lichtintensität können anstelle von drei auch mehr Dioden verwendet werden. Insbesondere kann z.B. eine weitere Leuchtdiode 1' (siehe Fig. 5) neben oder über der Diode 1 angeordnet werden, welche ihr Licht parallel zum Licht der Diode 1 nach hinten ausstrahlt.

Während beim eben beschriebenen Ausführungsbeispiel drei oder mehr Leuchtdioden verwendet werden, kann durch komplexere Ausbildung der Spiegeloptik bereits mit zwei Leuchtdioden eine vorschriftsgemässe Lichtverteilung mit ausreichenden Lichtwerten erreicht werden. Ein entsprechendes Ausführungsbeispiel ist in Figur 7 dargestellt. Das Rücklicht wird wiederum durch eine einzelne Leuchtdiode 11 der bereits beschriebenen Art gebildet. Das Licht für die seitlichen Abstrahlwinkel und den Raumwinkel nach oben wird durch die zweite Leuchtdiode 12 erzeugt, welche ebenfalls in der Fahrzeugmittelebene angeordnet ist. Die Spiegeloptik wird durch besonders geformte Spiegelkörper gebildet. Diese weisen beidseitig torische Flächen 13 auf, mit einer parabolischen Erzeugenden 14 und parallelen, kreisförmig gekrümmten Mantellinien 15. Durch diese torischen Flächen 13 wird ein Teil des Lichts der nach oben gerichteten Leuchtdiode 12 in den seitlichen Raumwinkel reflektiert. Ein anderer Teil gelangt durch eine Lücke 16 zwischen den Spiegelkörpern in den Raumwinkel nach oben. Um einen sich vorschriftsgemäss nach oben öffnenden Lichtkegel zu erzielen, besitzen die Spiegelkörper zur Lücke 16 hin Flächen 17, die als konvexe Zylinderspiegel ausgebildet sind. Dadurch wird das dort auftreffende Licht so reflektiert, dass sich insgesamt ein Lichtkegel mit vorschriftsgemässem Oeffnungswinkel bildet.

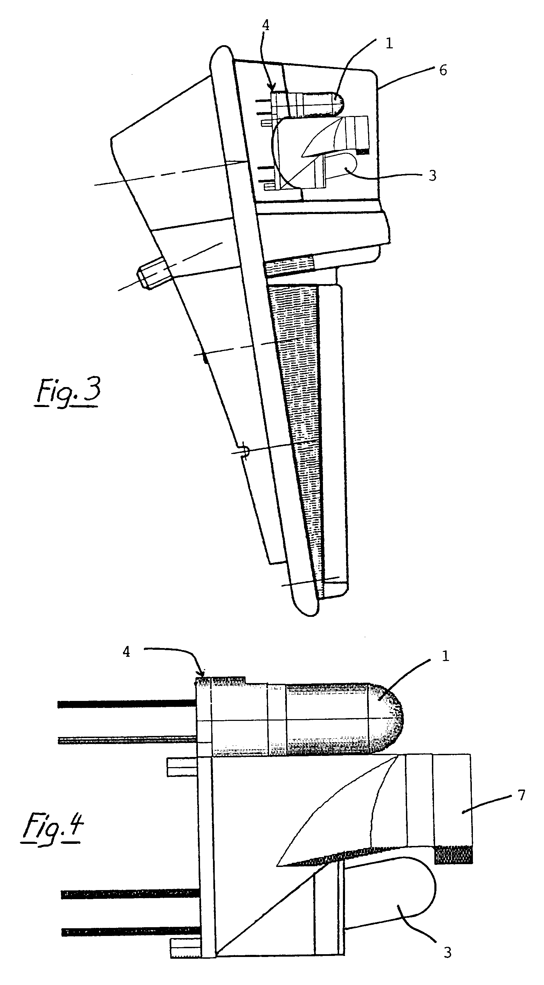

Auch der so ausgebildete Träger kann in das in Figur 1 und 3 gezeigte Gehäuse eingesetzt werden. Seine Herstellung kann auf die beschriebene Weise durch Spritzpressen erfolgen.

Die beschriebene Schlussleuchte wird in herkömmlicher Art am Schutzblech des Hinterrades eines Zweirades befestigt. Sie wird vorzugsweise an eine Fahrradlichtanlage mit stabilisierter Spannung und aufladbarer Batterie für die Standlichterzeugung angeschlossen. Eine geeignete Anlage ist z.B. in der Europäischen Patentveröffentlichung Nr. 0 460 585 beschrieben.

Da die beschriebene Lampe einen relativ geringen Stromverbrauch aufweist, kann ein Nachleuchten der Lampe bei stehendem Fahrrad oder nach Abschalten der Beleuchtung in einfacher Weise dadurch erreicht werden, dass parallel zu den Dioden (und allfälligen Bauteilen zur Strombegrenzung) ein Kondensator geschaltet wird. Die Energie des Kondensators kann sich somit über die Lampe entladen und ein Nachleuchten bewirken. Mit handelsüblichen Kondensatoren grosser Kapazität können in dieser Art z.B. Nachleuchtdauern im Bereich von 1-30 Minuten erreicht werden.

Mit der erfindungsgemässen Schlussleuchte gelingt es, bei wesentlich geringerer Leistungsaufnahme und wesentlich längerer Lebensdauer die vorschriftsgemässen Lichtwerte zu erzielen. Da die Lichtleistung schon bei kleiner Spannung erreicht wird, ist bei langsamer Fahrweise die volle Wirksamkeit sichergstellt.

## Patentansprüche

1. Schlussleuchte für Zweiradfahrzeuge, dadurch gekennzeichnet, dass als Lichtquellen mindestens zwei Leuchtdioden (1-3; 11, 12) vorgesehen sind, von denen mindestens eine (1; 11) in Fahrtrichtung nach rückwärts ausgerichtet ist und mindestens eine weitere mit einer Spiegeloptik (7,8; 13-17) zusammenwirkt, derart, dass ein Teil ihres Lichts seitlich und ein Teil nach oben abgestrahlt wird.

2. Schlussleuchte nach Anspruch 1, dadurch gekennzeichnet, dass als Lichtquellen mindestens drei Leuchtdioden (1-3) vorgesehen sind, wovon zwei (2,3) nach je einer Seite hin abgewinkelt sind und je mit einem Spiegel (7,8) zusammenwirken, der ein Teil ihres Lichts nach oben ablenkt.

3. Schlussleuchte nach Anspruch 2, dadurch gekennzeichnet, dass die Spiegel (7,8) konvex sind und das nach oben ausgestrahlte Licht einen sich nach oben öffnenden Kegel bildet.

4. Schlussleuchte nach Anspruch 2 oder 3, dadurch gekennzeichnet, dass die konvexen Spiegel (7,8) zylindrisch sind, wobei die Zylinderachse quer zur Achse der entsprechenden, abgewinkelten Leuchtdiode (2,3) liegt.

5. Schlussleuchte nach Anspruch 1, dadurch gekennzeichnet, dass als Lichtquellen zwei Leuchtdioden (11,12) vorgesehen sind, die beide in der Fahrzeugmittelebene gegeneinander abgewinkelt angeordnet sind, wobei die eine (11) nach rückwärts und die andere (12) in Fahrrichtung nach oben ausgerichtet ist und wobei letztere mit einer Spiegelanordnung (13-17) zusammenwirkt, derart, dass ihr Licht nach oben sowie nach beiden Seiten hin ausgestrahlt wird.

6. Schlussleuchte nach Anspruch 5, dadurch gekennzeichnet, dass die Spiegelanordnung (13-17) mehrere Spiegelflächen (13) aufweist, von denen je eine jeder Seite zugeordnet ist.

7. Schlussleuchte nach Anspruch 6, dadurch gekennzeichnet, dass die Spiegelanordnung (13-17) in der Fahrzeugachse eine Lücke (16) aufweist, die durch Spiegelflächen (17) begrenzt ist, derart, dass das nach oben ausgestrahlte Licht einen sich nach oben öffnenden Kegel bildet.

8. Schlussleuchte nach einem der vorangehenden Ansprüche, dadurch gekennzeichnet, dass die Leuchtdioden (1-3; 11,12) Licht im roten Wellenlängenbereich ausstrahlen und in einem Gehäuse mit glasklarer Abdeckhaube (6) angeordnet sind.

9. Schlussleuchte nach einem der vorangehenden Ansprüche, dadurch gekennzeichnet, dass die Leuchtdioden (1-3; 11,12) auf einem gemeinsamen Träger (4) gehalten sind, in welchen die Spiegeloptik (7,8; 13-17) eingeformt ist.

10. Schlussleuchte nach Anspruch 9, dadurch gekennzeichnet, dass der Träger (4) mindestens teilweise verspiegelt ist.

11. Schlussleuchte nach einem der vorangehenden Ansprüche, dadurch gekennzeichnet, dass zwei (1,1') der Leuchtdioden in Fahrtrichtung nach rückwärts ausgerichtet sind.

12. Schlussleuchte nach eindem der vorangehenden Ansprüche, dadurch gekennzeichnet, dass sie einen Kondensator aufweist, welcher während dem Betrieb der Leuchte geladen wird und dessen Ladung sich nach einem Abschalten der Stromzufuhr zur Leuchte über die Dioden entleert, womit ein Nachleuchten bewirkt wird.

## Claims

1. Tail light for two-wheeled vehicles, **characterised in that** at least two light-emitting diodes (1 - 3; 11, 12) are provided as light sources, of which at least one (1; 11) is directed rearwardly relative to the direction of travel and at least one further one co-operates with a mirror-optical system (7, 8; 13 - 17) in such a manner that a part of its light is emitted sideways and a part is emitted upwardly.

2. Tail light according to claim 1, **characterised in that** at least three light-emitting diodes (1 - 3) are provided, of which two are angled towards the respective sides and each co-operates with a respective mirror (7, 8) which deflects a part of its light upwardly.

3. Tail light according to claim 2, **characterised in that** the mirrors (7, 8) are convex and the upwardly radiated light forms an upwardly diverging beam.

4. Tail light according to claims 2 or 3, **characterised in that** the convex mirrors (7, 8) are cylindrical, wherein the axis of the cylinder lies transversely to the axis of the corresponding, angled light-emitting diode (2, 3).

5. Tail light according to claim 1, **characterised in that** two light-emitting diodes (11, 12) are provided as light sources, both being in a mutually angled-off arrangement in the central plane of the vehicle, wherein one (11) is directed rearwardly and the other (12) upwardly relative to the direction of travel and wherein the latter co-operates with a mirror arrangement (13 - 17) such that its light is radiated upwardly as well as towards both sides.

6. Tail light according to claim 5, **characterised in that** the mirror arrangement (13 - 17) has a plurality of mirror surfaces (13) of which a respective one is associated with each side.

7. Tail light according to claim 6, **characterised in that** the mirror arrangement (13 - 17) has a gap (16) on the axis of the vehicle which is bounded by the mirror surfaces (17) such that the upwardly radiated light forms an upwardly diverging beam.

8. Tail light according to any preceding claim, **characterised in that** the light-emitting diodes (1 - 3; 11, 12) radiate light in the red wavelength spectrum and are arranged in a housing with a crystal-clear covering cap (6).

9. Tail light according to any preceding claim, **characterised in that** the light-emitting diodes (1 - 3; 11, 12) are retained on a common carrier (4) into which the mirror-optical system (7, 8; 13 - 17) is moulded.

10. Tail light according to claim 9, **characterised in that** at least a part of the carrier (4) has a reflective coating applied to it.

11. Tail light according to any preceding claim, **characterised in that** two (1, 1') of the light-emitting diodes are directed rearwardly in the direction of travel.

12. Tail light according to any preceding claim, **characterised in that** it has a condenser which is charged during operation of the light and the charge is discharged via the diodes on switching off the power supply to the light so that an afterglow is caused.

## Revendications

1. Feu arrière pour véhicules à deux roues, caractérisé en ce qu'il est prévu, comme source de lumière, au moins deux diodes à luminescence (1-3; 11,12), dont l'une au moins (1; 11) est dirigée vers l'arrière par rapport à la direction de déplacement et dont au moins une autre coopère avec un système optique à miroirs (7,8; 13-17) de telle sorte qu'une partie de sa lumière est émise latéralement et qu'une partie de sa lumière est émise vers le haut.

2. Feu arrière selon la revendication 1, caractérisé en ce qu'il est prévu, comme source de lumière, au moins trois diodes à luminescence (1-3), dont deux (2,3) sont dirigées obliquement chacune d'un côté et dont chacune coopère avec un miroir (7,8), qui dévie une partie de sa lumière vers le haut.

3. Feu arrière selon la revendication 2, caractérisé en ce que les miroirs (7,8) sont convexes et que la lumière émise vers le haut forme un cône qui s'ouvre vers le haut.

4. Feu arrière selon la revendication 2 ou 3, caractérisé en ce que les miroirs convexes (7,8) sont cylindriques, l'axe du cylindre s'étendant transversalement par rapport à l'axe de la diode à luminescence oblique correspondante (2,3).

5. Feu arrière selon la revendication 1, caractérisé en ce qu'il est prévu comme sources de lumière, deux diodes à luminescence (11,12), qui sont disposées toutes les deux en étant orientées obliquement en des sens opposés dans le plan médian du véhicule, l'une (1) étant dirigée vers l'arrière et l'autre (12) vers le haut par rapport à la direction de déplacement, et la dernière coopérant avec un système de miroirs (13-17), de telle sorte que sa lumière est émise vers le haut ainsi que des deux côtés.

6. Feu arrière selon la revendication 5, caractérisé en ce que le dispositif à miroirs (13-17) comporte plusieurs surfaces réfléchissantes (13), dont l'une respective est associée à chaque côté.

7. Feu arrière selon la revendication 6, caractérisé en ce que le dispositif à miroirs (13-17) délimite, au niveau de l'axe du véhicule, un espace libre (16), qui est limité par les surfaces réfléchissantes (17) de telle sorte que la lumière émise vers le haut forme un cône qui s'ouvre vers le haut.

8. Feu arrière selon l'une des revendications précédentes, caractérisé en ce que les diodes à luminescence (1-3; 11,12) émettent une lumière située dans la gamme des longueurs d'onde du rouge et sont disposées dans un boîtier comportant un capot de revêtement en verre transparent (6).

9. Feu arrière selon l'une des revendications précédentes, caractérisé en ce que les diodes à luminescence (1-3; 11,12) sont fixées sur un support commun (4), dans lequel est formé le dispositif optique à miroirs (7,8; 13-17).

10. Feu arrière selon la revendication 9, caractérisé en ce que le support (4) est au moins partiellement métallisé.

11. Feu arrière selon l'une des revendications précédentes, caractérisé en ce que deux (1,1') des diodes à luminescence sont dirigées vers l'arrière par rapport à la direction de déplacement.

12. Feu arrière selon l'une des revendications précédentes, caractérisé en ce qu'il comporte un condensateur, qui se charge pendant le fonctionnement du feu et dont la charge s'évacue par l'intermédiaire des diodes après une interruption de l'alimentation en courant du feu, ce qui produit un éclairage résiduel.
